# EUROPEAN PATENT SPECIFICATION

(11) **EP 1 044 571 B1**
(45) Date of publication and mention of the grant of the patent: **11.04.2007**
(21) Application number: 98958471.9
(22) Date of filing: 05.11.1998
(51) Int. Cl.: H04Q 3/62, H04M 1/00

(54) **METHOD AND APPARATUS FOR INTERFACING ANALOG TELEPHONE APPARATUS TO A DIGITAL, ANALOG OR HYBRID TELEPHONE SWITCHING SYSTEM**
VERFAHREN UND GERÄT ZUR SCHNITTSTELLENBILDUNG ZWISCHEN EINEM ANALOGEN TELEFONGERÄT UND EINEM DIGITALEN , ANALOGEN ODER HYBRIDEN FERNSPRECHVERMITTLUNGSSYSTEM
PROCEDE ET DISPOSITIF D'INTERFACE D'UN POSTE TELEPHONIQUE ANALOGIQUE AVEC UN SYSTEME DE COMMUTATION TELEPHONIQUE NUMERIQUE, ANALOGIQUE, OU HYBRIDE

(30) Priority: 06.11.1997 US 64382 P; 19.12.1997 US 994211
(43) Date of publication of application: 18.10.2000
(73) Proprietor: Hello Direct Inc., San Jose, CA 95138 (US)
(72) Inventor: STELMAN, Bruce, W., San Jose, CA 95139 (US)
(74) Representative: Reeve, Anna Elizabeth
(86) International application number: PCT/US1998/023571
(87) International publication number: WO 1999/025132

(56) References cited:
- EP-A- 0 542 705
- EP-A- 0 555 015
- EP-A- 0 690 652
- WO-A-91/16796
- WO-A-93/12622
- DE-C- 19 527 806
- GB-A- 2 303 021
- US-A- 4 928 306
- US-A- 5 629 926
- US-A- 5 671 251

## Description

### Field of the Invention:

The invention relates to the field of telephony. More particularly, the invention relates to an adaptive interface for interfacing a two-wire or a four-wire analog telephone instrument to a digital, analog or hybrid telephone switching system.

### Background of the Invention:

A two-wire analog telephone set of the type commonly found in the homes of telephone service subscribers typically includes a base unit connected to a central office of a telephone service provider via a bi-directional, two-wire, telephone line and also includes a handset connected to the telephone base unit via a four-wire handset cable. The handset cable has four wires because, for two-way voice communication, the handset includes both a microphone and a speaker, each of which requires a pair of wires. Typically, the telephone base supplies audio signals to the speaker and a DC biasing voltage to the microphone, while the telephone base receives audio signals from the microphone. A two-wire to four-wire converter included in the telephone base unit converts the two central office signals into the four handset signals. In addition, the telephone set includes a ring detector for detecting an AC ring signal provided by the central office and a hook-switch for signalling the central office for answering or placing calls. When the handset is removed from its cradle, the hook switch controls draw of DC current from the central office by the telephone set which is detected by the central office.

A conventional modem transmits digital data over a two-wire telephone line by modulating an analog carrier signal according to the digital data. Typically, the digital data is generated by a computer or facsimile machine connected to the modem. The carrier signal is a tone within the frequency range of telephone transmission line. Upon reception by a second modem at the other end of the transmission line, the digital data is reconstructed by demodulating the received signal.

Business organizations often utilize a telephone switching system for providing telephone service to telephone users within the organization. The telephone switching system can have an all-digital interface with its corresponding compatible telephone sets, such as in a digital private branch exchange (PBX). Alternately, the telephone switching system can have an all-analog interface, such as is provided by an analog line card in a PBX or by a central office. In addition, the telephone switching system can provide a combined digital and analog interface with its corresponding compatible telephone sets, such as in a hybrid PBX or a key telephone system (KTS). For the purposes of this document, the term "PBX" is utilized to encompass equipment similar to those the above-listed types of telephone switching equipment.

Telephone sets that are compatible with a particular PBX utilized by a business organization are located on the desks of the users. Each PBX-compatible telephone set is connected to the PBX via a corresponding extension line, while the PBX is connected to a telephone service provider via one or more outside lines. The PBX typically includes capability for appropriately connecting incoming calls to the user telephone sets and for connecting outgoing calls from the user telephone sets to an outside line. In this way, fewer than one outside line per telephone set is needed, thus, reducing the cost of the telephone service. In addition, the PBX typically provides a variety of features to the users of the PBX, such as connecting calls among the users and providing voicemail services.

To implement all of the functions of the PBX, certain control and overhead communications must take place between each user's telephone set and the PBX. These communications typically include digital status, initialization and command signals in addition to the two-way voice signals necessary to carry on a telephone conversation. For example, the PBX must know whether a telephone set is connected to a particular extension line in order to know whether or not to route calls to that extension. As another example, the PBX must interact with the user telephone sets in order for the users to receive incoming calls, initiate outgoing calls, terminate telephone calls and to access voicemail and other features of the PBX.

In general, communication protocols utilized for control and overhead communications differ among the various manufacturers of PBX's. In addition, in an all-digital PBX, the voice signals are communicated between the telephone sets and the PBX as digital samples. Thus, analog voice signals are digitally sampled and encoded according to various different schemes (e.g. µ-law or A-law) before they are communicated. Upon reception, the digital samples are decoded and converted back into analog voice signals. In a hybrid system, voice signals are communicated as analog signals, while control and overhead communications are digital signals. Therefore, a two-wire analog telephone instrument, such as a modem, fax modem, facsimile machine or teleconferencing device, cannot generally interface directly with a PBX. Nor can a four-wire analog telephone instrument, such as a headset, handset or modem, generally interface directly with a PBX.

This creates a problem for users of a PBX who wish to use universally available analog telephone instruments, such as modems, fax modems, facsimile machines, teleconferencing devices, headsets or handsets, in addition to their PBX-compatible telephone sets. This problem has intensified by the recent increase in demand for access to the world wide web, which is typically accessed through use of a modem connected to a personal computer. A proposal has been to provide a dedicated outside line for each such analog telephone instrument. This solution is not entirely satisfactory, however, because it negates the savings which result from the PBX limiting the number of required outside lines. Another solution has been to provide an analog line card in the PBX and a separate line connecting the two-wire analog telephone instrument to the PBX. This solution can be costly due to the need to install separate extension lines to connect each of the PBX-compatible telephone set and the analog telephone instrument to the PBX.

Another solution has been to provide a device which interfaces a modem with a telephone set through the handset port of the telephone set. For example, U.S. Patent No. 4,907,267 discloses a modem interface device for use with a telephone set having a base unit and a handset. The telephone set can be a two-wire telephone set or a telephone set designed for use with a PBX. To use the modem interface device, the handset is unplugged from the handset jack of the base and plugged into a handset jack in one end of the device. Extending from the device is a four-wire cable which is connected to the handset jack of the base. The device also includes a modular jack for accepting a two-wire cable which connects the device to a two-wire telephone instrument, such as a modem. A series of switches are manually positioned to select between voice and data communications and to configure the interface device to match the signalling characteristics of the particular telephone set being used.

The manually operable switch arrangement described in U.S. Patent 4,907.267 is improved upon in two products manufactured by Unlimited Systems Corp. of San Diego. California. A first of these products, the "KONEXX Office Konnector." connects to the base of a telephone set and to the handset to provide an interface for a two-wire telephone, facsimile machine or modem. The device detects when the two-wire telephone, facsimile machine or modem is placed off-hook for switching between voice and data communications. A second of these products, the "KONEXX Konference," is similarly connected between the base and handset, but provides an interface for a teleconferencing device. For each of these devices, a manually operable switch is positioned in one of four positions for adjusting the device to the signalling characteristics of the particular telephone set being used.

The aforementioned interface devices, however, can be inconvenient for interfacing an analog telephone instrument to a PBX. This is because to install such an interface device, the handset cord of a PBX-compatible telephone set must first be disconnected from its base. Then, the interface device must be connected to both the handset and to the base. Next, the analog telephone instrument must be connected to the interface device. Finally, the switch positions for the interface device must be correctly set.

Perhaps a more significant drawback, however, is that each time the analog telephone instrument is used to answer or place a call, the user must manually place the PBX-compatible telephone set off-hook. This is generally accomplished by removing the handset of the PBX-compatible telephone from its cradle. Similarly, when finished using the analog telephone instrument, the user must return the PBX-compatible telephone to its on-hook condition. Otherwise, if the user forgets to return the PBX-compatible telephone to its on-hook condition, incoming calls cannot be connected and will receive a busy indication. In addition, the handset port of the PBX-compatible telephone generally does not provide a ring signal which may be required for automatic answering functions. Another drawback is that some PBX-compatible telephones do not accept DTMF signals through the handset port though DTMF signals may be required by the PBX system for dialing telephone numbers. Thus, for example, auto-dialing features of an analog device will fail to operate. Therefore, the actual telephone keypad must be used to dial for the analog device. Furthermore, the cables required for connecting such an interface device can become tangled and tend to provide a cluttered appearance on the user's desk.

Therefore, what is needed is a technique for interfacing an analog telephone instrument to a PBX that does not require access to the handset port of a PBX-compatible telephone. What is further needed is such a technique that has sufficient flexibility to adapt to the signaling characteristics of a wide variety of commercially available PBX's. What is still further needed is such a technique that requires a minimum of additional cables to accomplish its functions and that minimizes technical ability required from a user.

German Patent Application DE C 195 27 806 is directed to a private communication system and an allocated, private communication terminal equipment that is not directly connectable. The terminal equipment emulation unit pair are connectable to one another at least via a public dialed communication network, where the connection of at least one message path and of an additional signaling path is controlled via the public dialed communication network and the switching of the paths suited to the terminal equipment emulation unit pair is checked. With the assistance of the terminal equipment emulation unit pair, isolated or external communication terminal equipment can be connected. The connection suited to the terminal equipment emulation unit pair is checked with the assistance of a specific check procedure.

European patent application EP-A-0 542 705 is directed to an interface adaptor for the connection of a variety of equipment to the ISDN network which utilises the in-built capacity of the ISDN network and, more particularly, the different channels provided by the network. The adaptor includes an S-interface unit, a control processor unit and interface circuits which are adapted to provide ports for communication with telemetry equipment and/or computer terminals and/or analog equipment.

International patent application WO-A-93 12622 is directed to a network terminating unit for connecting analog and digital communication systems to a digital network, having an analog voice module for connection to an analog private exchange, a high speed data communication module for connection to high .speed communications devices and an interface for common channel signaling connection to a digital network. The unit may further include a module for common channel signaling connectivity to a digital private exchange.

United States Patent Number 5,671,251 is directed an apparatus and method for a data communications device to selectively operate in a plurality of analog and digital modes, including as an analog modem, a digital modem, and as a terminal adapter.

A single, integrated data communications device may be configured and also subsequently reconfigured to provide for data communications over a variety of networks, including public switched telephone networks and digital networks, such as T1, E1 and ISDN. Signal simulation of the various networks may occur, such that the actual coupled network is transparent to a data terminal transferring information through the data communication device to the network.

British patent number GB2303021 is directed to an arrangement for coupling additional equipment by way of an interface, in particular in accordance with the ETSI-standard, to terminal equipment of a private branch exchange PABX. In this connection, the terminal equipment has an option bus by way of which any additional equipment can be connected. In the private branch exchange an additional equipment driver is made available that is specific to the additional equipment and which presents the additional equipment interface. The terminal equipment provides a communications channel between the additional equipment and the additional equipment driver in the private branch exchange, by way of which channel, the additional equipment and the additional equipment driver communicate in accordance with a protocol which is specific to the additional equipment.

### Summary of the Invention

According to a first aspect of the present invention there is provided a method of adaptively interfacing an analog telephone instrument to a telephone switching system comprising a plurality of terminal lines, wherein a signal path is provided from the plurality of terminal lines through an interface device, the interface device being coupled to the analog telephone instrument and the telephone switching system, the method comprising steps of:
a. polling electrical measurements of the plurality of terminals lines to identify active terminal lines, wherein the step of polling electrical measurements comprises measuring DC source resistance ratios measured across pairs of active terminal lines and comparing the measured DC source resistance ratios with pre-stored values;
b. emulating an off-hook condition so that the telephone switching system generates a dial tone signal;
c. detecting and monitoring the dial tone, including any signal generated by the telephone switching system; and
d. configuring the signal path according to a communication protocol identified from the electrical measurements, wherein the step of configuring comprises the step of performing signal level adjustments of a receiving communication signal and a transmitting communication signal by selecting a stored set of operational parameters, wherein the communication signals are communicated between the analog telephone instrument and the telephone switching system through the signal path.

According to a second aspect of the present invention there is provided an adaptive interface apparatus for interfacing an analog telephone instrument to a telephone switching system, the adaptive interface apparatus comprising:
a) a first port configured for coupling the apparatus to terminal lines of the telephone switching system wherein the telephone switching system is a private telephone switching system;
b) a second port configured for coupling the apparatus to a telephone set wherein the telephone set is pre-configured for compatibility with the telephone switching system;
c) a third port configured for coupling the apparatus to the analog telephone instrument;
d) a control circuit in communication with the first port, the second port and the third port, the control circuit comprising a learning circuit arranged to poll electrical measurements of the terminal lines to identify active terminal lines, the control circuit being arranged to measure a DC source resistance ratio across pairs of active terminal lines and compare the measured DC source resistance ratios with pre-stored values, the control circuit further being arranged to emulate an off-hook condition so that the telephone switching system generates a dial tone signal, the control circuit being arranged to detect and monitor the dial tone, including any signal generated by the telephone switching system, and configure the signal path according to a communication protocol identified from the electrical measurements, wherein the control circuit is further arranged to adjust the signal level of a receiving communication signal and a transmitting communication signal by selecting a stored set of operational parameters.

The invention is an adaptive interface method and apparatus for interfacing a two-wire analog telephone instrument, such as a modem, fax modem, facsimile machine or teleconferencing device, or a four-wire analog telephone instrument, such as a headset, a handset or a modem, to a private branch exchange (PBX). For purposes of this document, the term "analog telephone instrument" will be used to refer to both two-wire and four wire telephone instruments. The interface device according to the present invention is suitable for use with a variety of PBX's produced by different manufacturers, despite differences in signalling characteristics between the PBX and an associated PBX-compatible telephone. In a preferred embodiment, the invention does not require access to a handset port of the PBX-compatible telephone.

A PBX is generally connected to an associated PBX-compatible telephone via a two-wire telephone extension line. An extension line for a hybrid telephone switching system, however, can include up to eight wires. In a first embodiment of the present invention, both the interface device and the PBX-compatible telephone set are connected to the extension line. An analog telephone instrument is then connected to the interface device. The PBX-compatible telephone communicates with the PBX so as to notify the PBX that the extension line is capable of receiving incoming calls. In addition, the PBX-compatible telephone can initiate and receive telephone calls without interference by the interface device.

The analog telephone instrument can also initiate and receive telephone calls. To initiate an outgoing telephone call originated by the analog telephone instrument, the interface device detects a current draw (a dial tone request) by the analog telephone instrument, as occurs when the analog telephone instrument goes off-hook. Accordingly, the interface device emulates a central office from the perspective of the analog telephone instrument. In response to detecting the analog telephone instrument going off-hook, the interface device communicates an appropriate instruction to the PBX so as to emulate the PBX-compatible telephone going off-hook. This is accomplished without having to manually take the PBX-compatible telephone off-hook. According to the first embodiment, a telephone number to be called is dialed by using a keypad located on the interface device.

To receive an incoming call using the analog telephone instrument, the interface device receives a notification of the incoming call which is sent by the PBX and intended for the PBX-compatible telephone connected to the corresponding extension line. If the analog telephone instrument then goes off-hook, the interface device responds by communicating an appropriate instruction to the PBX so as to emulate the PBX-compatible telephone going off-hook. This is also accomplished without having to manually take the PBX-compatible telephone off-hook.

Once a telephone call is connected to the analog telephone instrument via the interface device, the interface device provides a two-way communication path between the analog telephone instrument and the PBX for voice or modem signals. Thus, the interface device receives voice or modem signals from the analog telephone instrument and converts them into a form suitable for reception by the PBX and receives voice or modem signals from the PBX and converts them into a form suitable for reception by the analog telephone instrument. For example, if the PBX is an all-digital PBX, the interface device performs appropriate analog-to-digital and digital-to-analog conversions.

When an incoming or outgoing telephone call is complete, the interface device detects that current is no longer drawn by the analog telephone instrument, as occurs when the analog telephone instrument is returned to its on-hook condition. In response, the interface device communicates an appropriate instruction to the PBX so as to emulate the PBX-compatible telephone returning to an on-hook condition.

A second embodiment differs from the first embodiment in that the keypad located on the PBX-compatible telephone is utilized to dial a telephone number to be called. According to the second embodiment, a keypad need not be provided on the interface device.

A third embodiment differs from the first and second embodiments in that a keypad located on the analog telephone instrument can be utilized to dial a telephone number to be called. The interface device receives dual-tone, multi-frequency (DTMF) signals which are generated by the analog telephone device as the telephone number is dialed. The interface device then converts these signals into a format appropriate for the PBX.

A fourth embodiment differs from the other embodiments in that the interface device communicates with the PBX so as to notify the PBX that the telephone connected to the extension line is capable of receiving incoming calls. Similar to the third embodiment, the keypad located on the analog telephone instrument can be utilized to dial a telephone number to be called. Thus, in the fourth embodiment, a PBX-compatible telephone it not required to be connected to the extension line along with the interface device.

In order to communicate voice and overhead signals with the PBX using a communication protocol appropriate to the PBX, the interface device must "learn" the characteristics of the PBX. Therefore, when the interface device is coupled to the PBX, a learning technique is performed.

A first step of the learning technique requires that the interface device determine whether or not the telephone system to which it is connected communicates voice signals as digital samples, such as an all-digital PBX, or whether the telephone system communicates voice signals in analog form, such as a hybrid PBX, a KTS, or a central office of a telephone service provider. The primary functions of the telephone sets compatible with each of these types of telephone switching systems are powered directly by the associated telephone switching system. The inventor has observed that the power supply characteristics differ for each type of telephone switching system relative to the modular interface terminal locations and the effective DC source resistances. Accordingly, a determination is made by the interface device polling up to eight terminals coupled to the extension line. By discovering which of the polled terminals are active, the interface device distinguishes between hybrid telephone switching systems and other types of telephone switching systems. Assuming the telephone switching system is a hybrid system, the particular model or manufacturer can generally be identified by discovering which polled terminals are active.

Assuming the telephone switching system is not a hybrid system, up to three DC source resistance measurements are taken for the extension line via the active terminals. A first measurement is an unloaded DC measurement. For the second two measurements, the extension line is loaded by alternate fixed resistive loads. The interface compares the results of these measurements to pre-stored values to determine whether the telephone switching system is an all-digital system or an analog system.

If the system communicates voice signals in a multi-wire hybrid-type format, the interface device configures itself accordingly. Thus, a next step in the learning technique is to emulate an off-hook condition. In response to the emulated off-hook condition, the hybrid PBX provides a dial tone signal to the receive lines of the extension. The interface device detects the dial tone signal and performs level adjustments for both the receive and transmit signal paths. The receive signal path is configured using the dial tone signal and the transmit path is configured using a set of prestored parameters appropriate to the hybrid PBX. This is accomplished by the interface device selecting a stored set of operational parameters from a plurality of such sets.

If the system communicates voice signals in an analog format, the interface device also configures itself accordingly. Thus, a next step in the learning technique is to emulate an off-hook condition. In response to the emulated off-hook condition, the PBX analog line card or central office provides a dial tone signal to the interface device. The interface device detects the dial tone signal and performs level adjustments for both the receive and transmit signal paths. The receive path is configured using the dial tone signal and transmit path is configured by implementing Transmit Objective Loudness Rating (TOLR) sensitivity levels.

Otherwise, if the system communicates voice signals as digital samples, a next step in the learning technique is to determine the signalling protocol which is utilized for communicating between the PBX and the associated PBX-compatible telephones. This is accomplished by the interface device momentarily open-circuiting the extension line. Then, the interface device monitors signals communicated between the PBX and the PBX-compatible telephone which initialize the PBX-compatible telephone and which notify the PBX that the PBX-compatible telephone connected to the extension line is capable of receiving incoming calls.

Then, based upon this determination, the interface device configures itself according to the appropriate signalling protocol. This is accomplished by the interface device selecting a stored set of operational parameters from a plurality of such sets. The sets of operational parameters are pre-stored in a memory device within the interface device. A selected set of operational parameters configures the interface device to communicate with the PBX using a protocol appropriate to the particular PBX being utilized.

Thus, the learning technique allows the interface device to automatically adapt itself to variations in signalling characteristics between the PBX and PBX-compatible telephone sets among the different PBX manufacturers.

### Brief Description of the Drawings:

Fig. 1 illustrates a block schematic diagram of an interface device according to the present invention coupled to a PBX, to a PBX-compatible telephone set and to one or more analog telephone instruments.
Fig. 2 illustrates a block schematic diagram of the interface control portion of the interface device according to the present invention.
Fig. 3 illustrates a flow diagram of a learning algorithm according to the present invention.
Fig. 4 illustrates a schematic diagram of a circuit for measuring a source resistance of the extension lines according to the present invention.

### Detailed Description of a Preferred Embodiment:

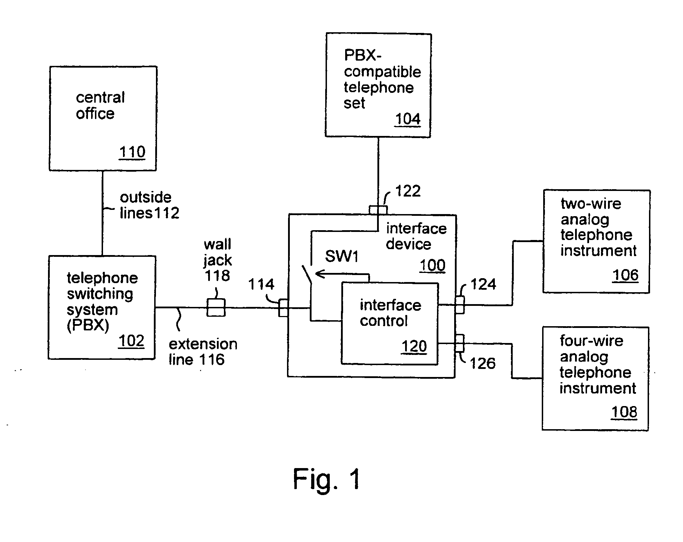

Fig. 1 illustrates a block schematic diagram of an interface device 100 according to the present invention coupled to a telephone switching system (PBX) 102, to a PBX-compatible telephone set 104, to a two-wire analog telephone instrument 106 and to a four-wire analog telephone instrument 108. The telephone switching system 102 can be an all-digital private branch exchange (PBX), a hybrid PBX, a key telephone system (KTS) or a direct line from a central office 110. For the purposes of this document, the term "PBX" encompasses all of the above-listed types of telephone switching equipment. And, for the purposes of this document, the term "PBX-compatible telephone set" refers to a telephone set 104 specifically designed to interface directly with a particular PBX 102. Typically, the PBX 102 and PBX-compatible telephone set 104 are provided by the same manufacturer. Though several manufacturers produce PBX's and corresponding PBX-compatible telephone sets, a PBX-compatible telephone set provided by a manufacturer is generally not capable of interfacing with a PBX provided by a different manufacturer.

The PBX 102 is coupled to a central office 110 of a telephone service provider via one or more outside lines 112 and is also coupled to a PBX port 114 of the interface device 100 via a extension line 116 and a wall jack 118. The extension line 116 is a two-wire line for most types of telephone switching systems, however, the extension line 116 for a hybrid switching system can include up to eight wires.

As an example, the PBX 102 can be centrally located at a business site, such as in a service room or basement. Several extension lines (only one is shown - extension line 116) extend to corresponding wall jacks (only one is shown - wall jack 118). The wall jacks are typically distributed throughout the business site. The wall jacks can be located in users' offices, conference rooms and reception areas. Conventionally, the PBX-compatible telephone set 104 would be plugged into the wall jack 118. According to the present invention, however, the interface device 100 is plugged into the wall jack 118, while the PBX compatible telephone set 104 is plugged into the interface device 100.

The interface device 100 includes an interface control portion 120 which is coupled to the PBX 102 via the PBX port 114. Internal to the interface device 100, the PBX port 114 is coupled to the interface control portion 120 and to a first terminal of a switch SW1. A second terminal of the switch SW1 is coupled to a PBX phone port 122. The switch SW1 is coupled to be controlled by the interface control portion 120. Also internally to the interface device 100, the interface control portion 120 is coupled to a two-wire analog phone port 124 and to a four-wire analog phone port 126.

Externally to the interface device 100, the PBX-compatible telephone set 104 is plugged into the PBX phone port 122, the two-wire analog telephone instrument 106 is plugged into the two-wire port 124 and the four-wire analog telephone instrument 108 is plugged into the four-wire port 126. In certain embodiments of the present invention, it is not necessary for the PBX-compatible telephone set 104 to always be present to obtain the advantages of the present invention. In addition, it is not necessary that both telephone instruments 106, 108 be present to obtain the advantages of the present invention.

The telephone instruments 106, 108 can each be a modem, fax modem, facsimile machine, teleconferencing device, headset, handset or other type of conventional analog telephone instrument. The four-wire telephone instrument 108 differs from the two-wire telephone instrument 106 primarily in that the four-wire telephone instrument 108 transmits analog signals via a first pair of wires and receives analog signals via a second pair of wires (uni-directional signaling), whereas, the two-wire telephone instrument 106 communicates analog signals in both directions (transmit and receive) via a single pair of wires (bi-directional signaling).

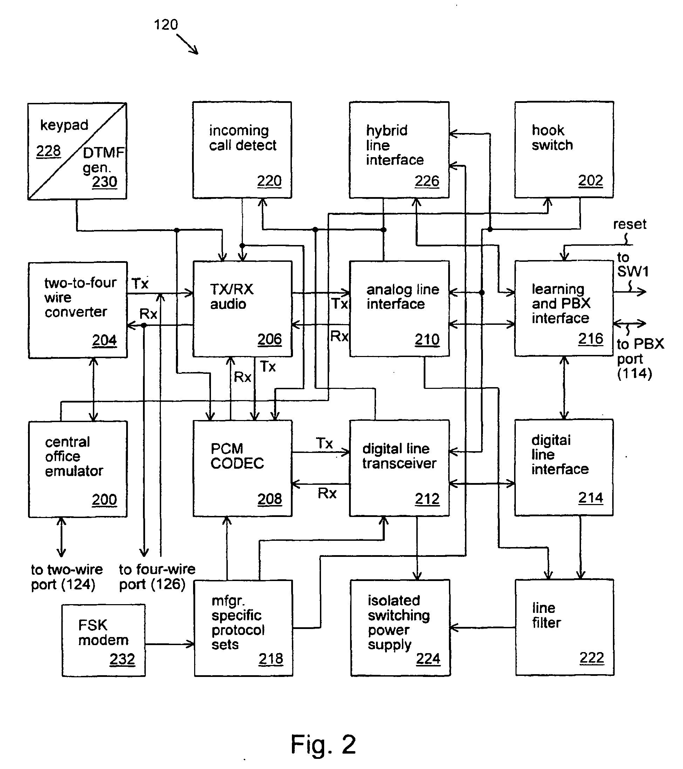

Fig. 2 illustrates a block schematic diagram of the interface control portion 120 of the interface device 100 illustrated in Fig. 1. A central office emulator 200 is coupled to the two-wire port 124 (Fig. 1). The central office emulator 200 provides DC power to the port 124 and detects the on-hook/off-hook condition of the two-wire analog telephone instrument 106 (Fig. 1) depending upon whether it draws current from the central office emulator 200. The central office emulator 200 provides an indication of the on-hook/off-hook condition of the two-wire analog telephone instrument 106 to a hook switch block 202.

The central office emulator 200 is also coupled to a two-to-four wire converter 204. Internally to the central office emulator 200, signals from the two-wire port 124 are routed to the two-to-four wire converter 204. The two-to-four wire converter 204 can be a conventional circuit, commonly known as a hybrid circuit, which converts the bi-directional signals from the two-wire port 124 into separate transmit and receive signals. These separate transmit and receive signals from the two-to-four wire converter 204 are coupled to a TX/RX audio block 206.

The signals from the four-wire port 126 (Fig. 1) are also routed to the TX/RX audio block 206. Two-to-four wire conversion is not required for these signals because they are already separated into transmit and receive channels. An indication of the on-hook/off-hook status for the four-wire telephone instrument can be provided by a user interface (not shown), such as a on/off switch, coupled to the hook switch block 202.

The TX/RX audio block 206 performs appropriate level adjustments for both the receive and transmit signal paths. Thus, the TX/RX audio block 206 includes analog signal processing circuits, such as gain-controllable amplifiers. The RX/TX audio block 206 ensures that the levels of the voice or modem signals received from the PBX 102 (Fig. 1) are adjusted for compatibility with the analog telephone instrument 106 or 108 (Fig. 1) and ensures that the levels of the signals received from the analog telephone instrument 106 or 108 are adjusted for compatibility with the PBX 102.

Via the TX/RX audio block 206, the separate transmit and receive signals from the two-to-four wire converter 204 and from the four-wire port 126 are coupled to a pulse code modulation (PCM) encoder/decoder (CODEC) block 208 and to an analog line interface block 210. Preferably, the PCM CODEC block 208 is selectively active or inactive depending upon whether the PBX 102 (Fig. 1) communicates voice or modem signals over the extension line 116 (Fig. 1) as digital samples or whether the PBX 102 communicates these signals in analog format. If the PBX 102 communicates these signals as digital samples, then the PCM CODEC block 208 is active. Conversely, if the PBX 102 communicates these signals in analog format, then the CODEC block 208 is inactive.

Assuming the PCM CODEC block 208 is active, a digital line transceiver 212 and digital line interface 214 are also active. The PCM CODEC block 208 converts analog voice or modem signals received from the TX/RX audio block 206 into a serial digital data stream. Preferably, this conversion is preformed according to A-LAW or µ-LAW companding techniques. The serial data stream formed by the PCM CODEC block 208 is representative of the voice or modem signal received from the analog telephone instrument 106 or 108 and is provided to the digital line transceiver 212.

The digital line transceiver 212 then combines the digitally sampled voice or modem signals with any necessary overhead or command signals, thereby forming a combined serial data stream. For example, the hook switch block 202 notifies the digital line transceiver 212 of the on-hook/off-hook status of the telephone instrument 106 or 108 (Fig. 1). The digital line transceiver 212 responds by including an appropriate command to the PBX 102 in the combined serial data stream.

The combined serial data stream formed by the digital line transceiver 212 is then provided to the digital line interface block 214. The digital line interface block 214 communicates the combined serial data stream to the PBX via a learning block 216. The digital line interface 214 is preferably controlled by the learning block 216.

Because the combined serial data stream is received by the PBX 102 (Fig. 1), it must be in a format that is compatible with, and understandable by, the particular PBX 102 coupled to the interface device 100. For example, the data must be appropriately synchronized with the PBX 102 and must be appropriately compressed and encoded according to the requirements of the PBX 102. In addition, the command and overhead information included in the combined serial data stream must be recognizable to the PBX 102.

The specific parameters required for appropriately forming the combined serial data stream, however, generally vary among the various of PBX's. Therefore, the PCM CODEC block 208 and digital line transceiver 212 are preferably pre-configured to perform analog-to-digital conversion appropriately for the particular PBX 102 coupled to the interface device 100. In addition, the digital line interface 214 is also pre-configured to form the combined serial data stream appropriately for the particular PBX 102 coupled to the interface device 100. This pre-configuration of the PCM CODEC 208, digital line transceiver 212 and digital line interface 214 is performed under control of the learning block 216 and according to data stored in manufacturer specific protocol sets 218.

The digital line interface 214 receives a serial stream of digital data generated by the PBX 102 and provides this serial data stream to the digital line transceiver 212. The digital line transceiver 212 then appropriately separates overhead and commands from voice or modem signals and passes the voice or modern signals to the PCM CODEC 208 for decoding. To perform this function appropriately, the digital line transceiver 212 is pre-configured, under control of the learning block 216 according to data stored in the manufacturer specific protocols block 218.

As an example of operation of the digital line transceiver 212, if the PBX 102 indicates that an incoming telephone call is to be connected to the extension line 116, the digital line transceiver 212 recognizes this condition and, in response, communicates this condition to an incoming call detect block 220. The incoming call detect block 220 then notifies the PCM CODEC block 208 to prepare to receive digital samples from the digital line transceiver 212. The incoming call detect block 220 can also notify the central office emulator 200 to send a ring signal to the two-wire analog telephone instrument 106 (Fig. 1).

Then, when the two-wire analog telephone instrument 106 goes off-hook, the central office emulator 200 (Fig. 2) recognizes this condition and, in response, notifies the hook switch block 202. Alternately, a manual switch notifies the hook switch block when the four-wire analog telephone instrument 108 (Fig. 1) goes off-hook. The hook switch block 202 then appropriately notifies the digital line transceiver 212 which then communicates with the PBX 102 so as to emulate the PBX-compatible telephone set 104 going off-hook.

The PCM CODEC block 208 converts the digital samples received from the digital line transceiver 212 into an analog signal. The digital samples are received as a one-bit-wide stream of digital values. Accordingly, the conversion is performed by appropriately parsing the received stream of digital values into a series of digital values, each digital value having an appropriate width. Then, any compression and/or encoding performed by the PBX 102 (Fig. 1) is reversed. Finally, the analog signal is reconstructed from the series of digital values. To perform this conversion appropriately, the PCM CODEC block 208 is pre-configured, under control of the learning block 216 according to a manufacturer specific format and synchronization of the digital samples stored in the manufacturer specific protocols block 218.

The manufacturer specific protocol sets 218 includes a plurality of sets of conversion parameters appropriate for PBX's produced by various different manufacturers. Each set of parameters includes information relating to an appropriate format and synchronization of the digital samples, decompression and decoding of the digital samples, appropriate compression and encoding of the analog signals into digital samples, generation of commands to the PBX 102 and recognition of commands from the PBX 102. In general, these parameters are specific to each PBX manufacturer.

The analog signal generated by the PCM CODEC block 208 is provided to the TX/RX audio block 206 for routing to the two-wire port 124 via the central office emulator 200 and to the four-wire port 126.

A line filter 222 is coupled to the digital line interface 214 and to the analog line interface 210 for obtaining supply power for the interface device 100 (Fig. 1) from the PBX 102 (Fig. 1) via the extension line 116 (Fig. 1). The interface device 100 can also be externally powered. The line filter 222 filters frequency components above a predetermined threshold from the extension line 116 thereby forming an unregulated DC voltage. Alternately, an unregulated DC voltage can be obtained from a battery supply or from a rectified AC line voltage. The unregulated DC voltage is provided to an isolated switching power supply 224. The isolated switching power supply 224 provides power to the circuits of the interface device 100, but is electrically isolated from the source of power. When the digital line transceiver 212 is active, the digital line transceiver 212 preferably provides a synchronizing signal to the switching power supply 224. This synchronizing signal controls switching of the power supply 224 to occur out of phase with digital-to-analog sampling performed by the PCM CODEC block 208 for minimizing sampling errors caused by switching noise.

Assuming that the PBX 102 communicates voice or modem signals in analog format, such as when an analog line card is used in the PBX 102 or when the PBX 102 is a hybrid switching system, the PCM CODEC block 208 is preferably inactive. The analog line interface 210 receives analog signals from the PBX 102 via a bi-directional communication path through the learning block 216. The analog line interface block 210 converts the bi-directional signals into separate uni-directional transmit and receive signal paths. Accordingly, the analog signals are communicated between the analog line interface block 210 and the TX/RX block 206 via separate uni-directional signal paths.

Separate uni-directional transmit and receive signal paths connect the TX/RX audio block 206 to the four-wire telephone instrument 108 (Fig. 1). For the two-wire telephone instrument 106 (Fig. 1), the two-to-four wire converter 204 converts the separate uni-directional signal paths coupled to the TX/RX audio block 206 into a bi-directional signal path through the central office emulator 200.

The analog line interface block 210 monitors the signals originated by the PBX (Fig. 1) for detecting commands from the PBX. For example, the analog line interface block 224 detects whether an incoming call to is to be connected to the extension line 116. Assuming that the analog line interface block 224 detects an incoming call, the analog line interface block 224 notifies the incoming call detect block 220 of this condition. The incoming call detect block 220 then notifies the TX/RX audio block 206 to prepare to receive incoming voice signals from the PBX 102 (Fig. 1). In response, the incoming call detect block 220 can also notify the central office emulator 200 to send a ring signal to the two-wire analog telephone instrument 106.

The analog line interface block 210 also combines the analog voice or modem signals received from the TX/RX audio block 206 with any necessary overhead or command signals. For example, the hook switch block 202 notifies the analog line interface 210 of the on-hook/off-hook status of the telephone instrument 106 or 108 (Fig. 1). The analog line interface 210 responds by sending an appropriate command to the PBX 102, for example, by drawing a DC current from the PBX 102.

Note that for a hybrid PBX, the overhead and command signals sent to the PBX 102 may be in the form of serialized or parallel digital data, though the voice or modem signals are communicated in analog format. Generally the overhead and command signals for a hybrid system are communicated via separate lines within the extension line 116 (Fig.1) from the lines utilized for communicating voice signals. As mentioned, when the PBX 102 is hybrid switching system, the voice signals are communicated between the PBX 102 and the analog telephone instrument via the analog line interface 210 and TX/RX audio block 206. For a hybrid switching system, however, a hybrid interface block 226 is provided for communicating overhead and command signals with the PBX 102. The hybrid interface block 226 is preferably pre-configured under control of the learning block 216 and according to data stored in manufacturer specific protocol sets 218.

As an example of operation of the hybrid interface block 226, when the PBX 102 sends a command that an incoming call is to be directed to the extension line 116, the hybrid interface block 226 notifies the incoming call detect block 220. Also, when the hook switch block 202 indicates to the hybrid interface block 226 that the analog telephone instrument 106 or 108 (Fig. 1) is off-hook, the hybrid interface block 226 requests a dial tone from the PBX 102.

An FSK modem 232 is also coupled to the manufacturer specific protocol sets 218. The FSK modem 232 allows updates, additions, or modifications to be made to the manufacturer specific protocol sets 218 from a remote location over a telephone line connection.

According to a first embodiment of the present invention, a keypad 228 and a dual-tone, multi-frequency (DTMF) generator 230 are provided for initiating telephone calls from the analog telephone instrument 106 or 108 (Fig. 1). The keypad 228 is coupled to the DTMF generator 230. The DTMF generator 230 is coupled to the TX/RX audio block 206 and to the PCM CODEC block 208. For example, to initiate a telephone call, the two-wire analog telephone instrument 106 is placed off-hook. In response, the central office emulator 200 notifies the hook switch block 202 of this condition. The hook switch block 202 then notifies the analog line interface 210, the digital line transceiver 212 and the hybrid line interface 226. An active one of the analog line interface 210 or the digital line transceiver 212 then sends an appropriate command to the PBX 102 (Fig. 1) so as to emulate the PBX-compatible telephone set 104 (Fig. 1) going off-hook. Once the PBX recognizes that call is to be initiated, the keypad 228 is utilized to dial the telephone number to be called. The DTMF generator 230 then generates dual tones for each digit of a telephone number dialed via the keypad 228.

In an alternate embodiment, the keypad 228 is replaced with a voice recognition block which converts a user's voice commands into signals appropriate for controlling the DTMF generator block 230. Such an embodiment could be utilized, for example, so that the user's hands remain free to perform other tasks, or could be utilized by persons having limited use of their hands.

The dual tones are then provided by the DTMF generator 230 to the TX/RX audio block 206 and to the PCM CODEC block 208. Assuming that the PBX 102 is has an analog interface, the dual tones are passed to the PBX 102 through the analog line interface 210 and learning block 216. Otherwise, assuming the PCM CODEC block 208 is active, the dual tones are converted according to the protocol required for the particular PBX 102 (Fig. 1) being utilized. Accordingly, the PCM CODEC block 208 is pre-configured for this conversion under control of the learning block 216 and according to data stored in manufacturer specific protocol sets 218. The appropriately converted dual tones are then passed to the PBX 102 via the digital line transceiver 212, the digital line interface 214 and the learning block 216.

A second embodiment differs from the first embodiment in that the keypad located on the PBX-compatible telephone set 104 (Fig. 1) is utilized to dial a telephone number to be called. According to the second embodiment, therefore, the keypad 228 (Fig. 2) and DTMF generator (Fig. 2) 230 need not be provided.

A third embodiment differs from the first and second embodiments in that a keypad located on the analog telephone instrument 106 or 108 (Fig. 2) can be utilized to dial a telephone number to be called. The interface device 100 (Fig. 1) receives dual-tone, multi-frequency (DTMF) signals which are generated by the analog telephone device 106 or 108 (Fig. 1) as the telephone number is dialed. An active one of the TX/RX audio block 206 (Fig. 2) or PCM CODEC 208 (Fig. 2) then converts these signals into a format appropriate for the PBX 102 (Fig. 1).

A fourth embodiment differs from the other embodiments in that the interface device 100 (Fig. 1) communicates with the PBX 102 (Fig. 1) so as to notify the PBX 102 that the extension line 116 (Fig. 1) is capable of receiving incoming calls. A keypad located on the analog telephone instrument 106 or 108 (Fig. 1) or the keypad 226 (Fig. 2) can be utilized to dial a telephone number to be called. Thus, in the third embodiment, a PBX-compatible telephone set 104 (Fig. 1) is not required to be connected to the extension line 116 along with the interface device 100 (Fig. 1). In this embodiment, however, a PBX-compatible telephone set 104 is required for appropriately configuring the interface device 100. Once the interface device 100 is appropriately configured, the PBX-compatible telephone set 104 can be disconnected from the interface device 100.

When an incoming or outgoing telephone call is complete, the central office emulator 200 (Fig. 2) of the interface device 100 (Fig. 1) detects that current is no longer drawn by the analog telephone instrument 106 or 108, as occurs when the analog telephone instrument 106 or 108 is returned to its on-hook condition. In response, the central office emulator 200 (Fig. 2) recognizes this condition and notifies the hook switch block 202 (Fig. 2). The hook switch block 202 then notifies an active one of the digital line transceiver 212 or analog line interface 210, which then communicates with the PBX 102 so as to emulate the PBX-compatible telephone set 104 returning to its on-hook condition.

In order to appropriately configure the interface device 100 (Fig. 1), particularly the PCM CODEC block 208, the digital line transceiver 212, the TX/RX audio block 206, the hybrid line interface 226 and the analog line interface block 210 to communicate with the PBX 102 (Fig. 1) according to a communication protocol appropriate to the particular PBX 102 being utilized, the interface device 100 must "learn" the characteristics of the PBX 102. To accomplish this, the interface device 100 performs a learning algorithm.

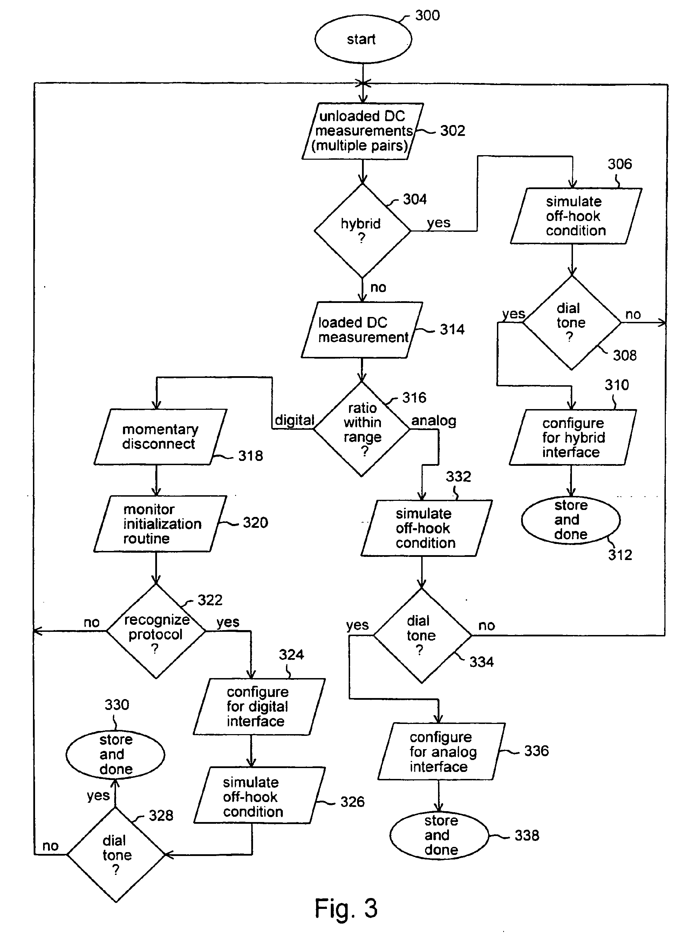

Fig. 3 illustrates a flow diagram of a learning algorithm which controls operation of the learning block 216 (Fig. 2) according to the present invention. The learning algorithm is initiated for appropriately configuring the interface device 100 (Fig. 1). Thus, logic circuitry included in the learning block 216 perform the function of determining whether the telephone switching system 102 communicates voice signals as digital samples or in analog format. In addition, logic circuitry included in the learning block 216. in conjuction with data stored in the manufacturer specific protocol sets 218 (Fig. 2), perform the functions of identifying a communication protocol utilized by the telephone switching system 102 and configuring the interface device 100 according to the protocol. It will be apparent, however, that a microprocessor or controller circuit operating according to a stored software program could also perform these same functions.

As an example, the learning algorithm determines which one or ones of the digital line interface block 214, the analog line interface block 210 and the hybrid line interface block 226 is to be active. The learning algorithm can be initiated each time power is supplied to the interface device 100. Alternately, the learning algorithm is initiated each time a reset control input is applied to the learning block 216 (Fig. 2). For example, the control input can be in response to a user pressing a button on the interface device 100.

Upon initiation, the learning algorithm moves from a state 300 to a state 302. Preferably, the learning algorithm determines whether or not the PBX 102 (Fig. 1) to which the interface device 100 (Fig. 1) is connected communicates voice signals as digital samples, such as an all-digital PBX, or whether the telephone system communicates voice signals in analog form, such as a hybrid PBX or a KTS. Note that a central office of a telephone service provider also communicates voice signals in analog form. Thus, assuming the interface device 100 is connected directly to a central office 110 (Fig. 1) of a telephone service provider, rather than to a PBX 102 (Fig. 1), the learning algorithm appropriately configures the interface device 100.

The inventor has observed that the power supply characteristics of the extension lines 116 (Fig. 1) differ for each of these types of telephone switching systems relative to the modular interface terminal locations and the effective DC source resistances as measured via the PBX port 114 (Fig. 1). For example, a hybrid switching system generally has more active wires in the extension lines 116 than does either an analog line interface to a PBX or an all-digital interface to a PBX. In addition, a DC source resistance for an analog interface tends to be higher than a DC source resistance for an all-digital interface.

Accordingly, in the state 302, the interface device polls up to eight terminals of the port 114. This is accomplished by measuring a voltage across selected pairs of the wires included in the extension line 116 via the PBX port 114 (Fig. 1). By discovering which of the polled terminals are active, the interface device 100 (Fig. 1) distinguishes between hybrid telephone switching systems and other types of telephone switching systems. Assuming the PBX 102 is a hybrid system, the particular model or manufacturer can generally be identified by discovering which polled terminals are active.

Once the step of polling is complete, the learning algorithm moves from the state 302 to the state 304. Based upon the results of the polling performed in the state 302, the learning algorithm determines whether or not the PBX is a hybrid PBX.

Assuming that the switching system communicates according to a multi-wire hybrid-type format, the learning algorithm moves from the state 304 to a state 306. In the state 306, the interface device 100 emulates an off-hook condition. Then, the learning algorithm moves from the state 306 to a state 308. In response to the emulated off-hook condition, the hybrid PBX is expected to provide a dial tone signal to the receive wires of the extension line 116. If the interface device 100 does not detect the dial tone signal in the state 308, this indicates that an erroneous measurement was performed in the state 302. Therefore, the learning algorithm returns from the state 308 to the state 302 where the measurements are repeated. If the interface device 100 is not appropriately configured after a predetermined number of attempts, then the interface device 100 preferably indicates an error condition.

Assuming the interface device 100 detects the dial tone signal in the state 308, the interface device 100 moves to a state 310. In the state 310, the interface device 100 configures itself for a hybrid interface by performing level adjustments for both the receive and transmit signal paths through the TX/RX audio block 206 (Fig. 2). The receive signal path is configured using the dial tone signal and the transmit signal path is configured according to a selected set of parameters appropriate to the hybrid PBX from the manufacturer specific protocol sets 218. This appropriately configures the interface device 100 for providing voice communication between the PBX 102 (Fig. 1) and analog telephone instrument 106 or 108 (Fig. 1). Additionally, in the state 310, the hybrid line interface 226 (Fig. 2) is configured to communicate overhead and commands to the PBX 102 according to parameters stored in the manufacturer specific protocol sets 218. Once the interface device 100 has been appropriately configured in the state 310, the learning algorithm moves to a state 312 which signifies that the learning algorithm is complete. Also in the state 312, the configuration parameters obtained in the state 310 are stored in non-volatile memory, such as a serial EEPROM, so that they will not be lost in the event of a power failure.

Assuming that in the state 304 it is determined that the PBX 102 (Fig. 1) is not a hybrid system, then the learning algorithm moves from tho state 304 to a state 314. Because the PBX 102 is not a hybrid PHX, the interface to the PBX 102 can be an analog interface, as in the case of an analog line card or a central office. Alternately the interface to the PBX 102 can be a digital interface, as in the case of an all digital PBX. In either case, the extension line 116 (Fig.1) is expected to include only two active wires.

The inventor has observed that a difference between these types of telephone systems is in a DC source resistance measured via the two active wires of the extension lines 116 (Fig.1). For example, a central office of a telephone service provider typically provides an unloaded line voltage of 48 volts DC. A source resistance depends upon the distance to the central office, however, 1300 ohms is typical. All-digital PBX's generally have unloaded line voltages between 14 and 48 volts DC with source resistances between 30 and 60 ohms. It can be seen, therefore, that PBX's that communicate voice signals as digital samples generally have much lower source resistance than a central office or a PBX that communicates voice signals in analog format. Therefore, the determination of whether or not the PBX 102 (Fig.1) communicates voice signals as digital samples or in analog form is accomplished by effectively measuring the DC source resistance.

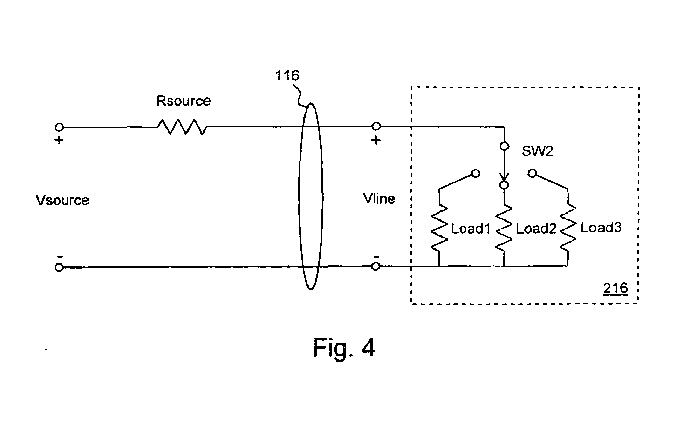

Fig. 4 illustrates a schematic diagram of a circuit for measuring a source resistance of the extension lines 116 (Fig.1) according to the present invention. A DC voltage, V source, is provided by the PBX 102 (Fig.1) via a series resistance Rsource. A DC voltage, Vline, is received by the learning block 216 of the interface device 100 (Fig-1). A switch SW2 selectively coupled one of three resistive loads across the extension lines 116. A first load LOAD1 has a large resistance value (e.g. greater than 20 M ohms or open circuit) so as to leave the extension line essentially unloaded. Second and third loads LOAD2 and LOAD3 have alternate values which are lower than the value of LOAD1 so as to the load the extension lines to varying degrees. For example, the value of LOAD2 can be comparable to an expected value of the source resistance Rsource for an analog interface (e.g. approximately 1 K ohms), while the value of LOAD3 can be comparable to an expected value of the source resistance Rsource for an all-digital interface (e.g. approximately 50 ohms), but is preferably a higher resistance to avoid any potentially excessive flow of current.

In the state 314, three DC source resistance measurements are taken for the extension line 116 (Fig. 1) via the active two terminals of the PBX port 114 (Fig. 1). A first measurement is an unloaded DC measurement. For this measurement, the switch SW2 is coupled to the first resistance LOAD1 and the resultant level of the voltage Vline is detected. Similarly, for the second measurement, the switch SW2 is coupled to the second resistance LOAD2 and the resultant level of the voltage Vline is detected. For the third measurement, the switch SW2 is coupled to the third resistance LOAD3 and the resultant level of the voltage Vline is detected. For each measurement the value of Vline is influenced by the relative values of Rsource and the resistance value coupled to the switch SW2 by voltage division.

Then the learning algorithm moves from the state 314 to a state 316. Because the results of the measurements taken in the state 314 are indicative of the values of Rsource and Vsource, in the state 316, the interface device 100 compares the results of these measurements, or ratios thereof, to pre-stored values to determine whether the telephone switching system is an all-digital system or an analog system.

If the comparison made in the state 316 indicates that the PBX 102 (Fig. 1) communicates voice signals as digital samples, a next step in the learning algorithm is to determine the signalling protocol which is utilized for communicating between the PBX 102 and the associated PBX-compatible telephone set 104 (Fig. 1). Accordingly, the learning algorithm moves from the state 316 to a state 318.

In the state 318, the interface device 100 (Fig. 1) momentarily disconnects the PBX-compatible telephone set 104 (Fig. 1) from the extension line 116 (Fig. 1) by momentarily opening the switch SW1 (Fig. 1) and then closing the switch SW1. Then, learning algorithm moves from the state 318 to a state 320.

The PBX 102 (Fig. 1) detects that the PBX-compatible telephone set 104 has been disconnected and, then, reconnected to the extension lines 116. In response, the PBX 102 communicates with the PBX-compatible telephone set 104 to initialize the PBX-compatible telephone set 104. These initialization signals differ among the various manufacturers and models of PBX's. Therefore, they provide indicia (a "signature") by which the particular PBX manufacturer and model can be recognized.

In the state 320, the interface device 100 (Fig. 1) monitors the indicia provided by these initialization signals communicated between the PBX 102 (Fig. 1) and the PBX-compatible telephone set 104 (Fig. 1) and compares them to pre-stored indicia. Each pre-stored indicia is stored in the manufacturer specific protocol sets 218 in association with a corresponding one of the sets of parameters utilized for appropriately configuring the interface device 100 (Fig. 1). Then, the learning algorithm moves to a state 322. Assuming that the interface device 100 recognizes the indicia (the "signature") provided by the initialization signals, the interface device 100 configures itself according to the appropriate signalling protocol. Accordingly, the learning algorithm moves from the state 320 to a state 322.

In the state 322, the learning block 216 selects an appropriate stored set of operational parameters from a plurality of such sets pre-stored in the manufacturer specific protocol sets 218 and appropriately configures the PCM CODEC 208 and digital line transceiver 212 according to the selected set. Then, the learning algorithm moves from the state 324 to a state 326.

In the preferred embodiment, once the interface device 100 (Fig. 1) is appropriately configured for the particular PBX 102 (Fig. 1) being utilized, a verification is performed. Therefore, in the state 326, the interface device 100 sends a command to the PBX 102 (Fig. 1) which simulates the PBX-compatible telephone set 104 (Fig. 1) going off-hook. Then, the learning algorithm moves from the state 326 to a state 328. In the state 328, the interface device 100 determines whether the PBX 102 is providing a dial tone in response to the command sent in the state 324. Assuming a dial tone is detected, the learning algorithm moves to state 330 which signifies that the learning algorithm is complete. Also in the state 330, the protocol and system configuration parameters are preferably stored in non-volatile memory, such as a serial EEPROM, so that they will not be lost in the event of a power failure.

Alternately, if in the state 328, a dial tone is not detected, or, if in the state 322, the interface device 100 does not recognize the indicia (the "signature") the learning algorithm returns to the state 302, and learning algorithm begins again. If the interface device 100 is not appropriately configured after a predetermined number of attempts, then the interface device 100 preferably indicates an error condition.

Assuming the PBX 102 (Fig. 1) communicates voice signals in an analog format, the interface device 100 (Fig. 1) configures itself accordingly. Thus, if it is determined in the state 316 that the PBX 102 communicates voice signals in an analog format, the learning algorithm moves from the state 316 to a state 332. In the state 332, the interface device 100 emulates an off-hook condition. In the preferred embodiment, this is accomplished by placing an appropriate resistance across the extension lines 116 so that the PBX 102 senses a current draw via the extension lines 116. Then, the learning algorithm moves from the state 332 to a state 334.

In response to the emulated off-hook condition, the PBX 102 (Fig. 1) is expected to provide a dial tone signal to the extension lines 116 (Fig. 1). Accordingly, in the state 334, the interface device 100 determines whether the dial tone is detected. Assuming that the dial tone is detected, the learning algorithm moves from the state 334 to a state 336.

In the state 336 and based upon the level of the dial tone signal, the interface device 100 performs level adjustments for both the receive and transmit signal paths through TX/RX audio block 206 of the interface device 100. The receive path is appropriately configured first utilizing the dial tone. Then, using side tone characteristics linking the receive and transmit paths, the transmit path is appropriately configured. The transmit path is preferably configured by implementing Transmit Objective Loudness Rating (TOLR) sensitivity levels.

Once the transmit and receive paths have been appropriately configured, the learning algorithm moves to state 338 which signifies that the learning algorithm is complete. Also in the state 338, the protocol and system configuration parameters are preferably stored in non-volatile memory, such as a serial EEPROM, so that they will not be lost in the event of a power failure.

The present invention has been described in terms of specific embodiments incorporating details to facilitate the understanding of the principles of construction and operation of the invention. It will be apparent to those skilled in the art that modifications within the scope of the claims appended hereto may be made in the embodiment chosen for illustration.
Specifically, it will be apparent to one of ordinary skill in the art that the method and the apparatus disclosed above are only illustrative of the preferred embodiment of the present invention.

## Claims

1. A method of adaptively interfacing an analog telephone instrument (106, 108) to a telephone switching system (102) comprising a plurality of terminal lines, wherein a signal path is provided from the plurality of terminal lines through an interface device (100), the interface device (100) being coupled to the analog telephone instrument (106, 108) and the telephone switching system (102), the method comprising steps of
a. polling electrical measurements of the plurality of terminals lines to identify active terminal lines, wherein the step of polling electrical measurements comprises measuring DC source resistance ratios measured across pairs of active terminal lines and comparing the measured DC source resistance ratios with pre-stored values;
b. emulating an off-hook condition so that the telephone switching system (102) generates a dial tone signal;
c. detecting and monitoring the dial tone, including any signal generated by the telephone switching system (102); and
d. configuring the signal path according to a communication protocol, the communication protocol being identified from the polled electrical measurements, wherein the step of configuring comprises the step of performing signal level adjustments of a receiving communication signal and a transmitting communication signal by selecting a stored set of operational parameters, wherein the communication signals are communicated between the analog telephone instrument (106, 108) and the telephone switching system (102) through the signal path.

2. The method of claim 1, further comprising the step of classifying the telephone switching system (102) in category of a hybrid, an analog or a digital telephone switching system prior to the step of configuring the signal path.

3. The method of claim 2, wherein the step of polling electrical measurements comprises measuring voltages from between pairs of terminals lines to identify the active terminal lines.

4. The method of claim 3, further comprising the step emulating an off-hook condition of a telephone set compatible with a hybrid telephone switching system and sensing for a dial-tone response from the telephone switching system (102).

5. The method of claim 4, wherein the communication protocol is selected from a group of hybrid system manufacture's protocols when a dial tone response is sensed.

6. The method of claim 5, wherein the step of configuring the signal path comprises the step of performing signal level adjustments of the receiving communication signal using the dial tone and the transmitting communication signal using the manufacturer's protocol.

7. The method of claim 4, further comprising repeating the steps of polling electrical measurements from the plurality of terminals lines, emulating an off-hock condition, detecting and monitoring the dial tone, and configuring the signal path according to the communication protocol, in the event that a dial tone is not detected.

8. The method of claim 1, wherein the step of comparing the measured DC source resistance ratios with pre-stored values comprises comparing the ratios with pre-stored values comprising expected DC source resistance ratios for analog arid digital telephone switching systems.

9. The method of claim 8, wherein DC source resistance ratio measurements are performed under unloaded conditions and loaded conditions.

10. The method of claim 8, further comprising the step of emulating an off-hook condition of a telephone set compatible with an analog switching system and sensing for a dial tone response through the signal path, when the DC source resistance ratios are indicative of an analog telephone switching system.

11. The method of claim 10, wherein the step of configuring the signal path to a communication protocol comprises configuring the signal path to a communication protocol selected from a group of analog system manufacturer's protocols when a dial tone response is sensed.

12. The method of claim 11, wherein the step of configuring the signal path comprises the step of performing level adjustment of a receiving communication signal using the dial tone and a transmitting communication signal using Transmit Objective Loudness Rating.

13. The method of claim 10, further comprising repeating the steps of polling electrical measurements from the plurality of terminals lines, emulating an off-hook condition, detecting and monitoring the dial tone, and configuring the signal according to the communication protocol, in the event that a dial-tone is not detected.

14. The method of claim 8, further comprising the steps of disconnecting the signal path between the telephone switching system (102) and a telephone set compatible with the telephone switching system when the DC source resistance ratios are indicative of a digital telephone switching system, thereby causing the telephone switching system to run an initializing signal sequence.

15. The method of claim 14, wherein the step of disconnecting the signal path between the telephone switching system and telephone set is performed by a signal path switch.

16. The method of claim 15, further comprising the step of monitoring the initializing signal sequence and selecting a protocol from a group of digital system manufacturer's protocols consistent with the initializing signal sequence.

17. The method of claim 16, further comprising the step of testing the configured signal path by emulating an off hook condition for a telephone set that is compatible with a digital telephone switching system and sensing for a dial tone, wherein proper configuration is indicated by a dial tone sensed.

18. The method of claim 17, further comprising repeating the steps of polling electrical measurements from the plurality of terminals lines, emulating an off-hook condition, detecting and monitoring the dial tone, and configuring the signal path according to the communication protocol, in the event that a dial tone is not detected or in the event that the initializing signal sequence is not recognized.

19. An adaptive interface apparatus for interfacing an analog telephone instrument (106, 108) to a telephone switching system (102), the adaptive interface apparatus comprising:
a) a first port (114) configured for coupling the apparatus to terminal lines of the telephone switching system (102) wherein the telephone switching system is a private telephone switching system;
b) a second port (122) configured for coupling the apparatus to a telephone set wherein the telephone set is pre configured for compatibility with the telephone switching system (102);
c) a third port (124) configured for coupling the apparatus to the analog telephone instrument;
d) a control circuit (120) in communication with the first port (114), the second port (122) and the third port (124), the control circuit (120) comprising a learning circuit arranged to poll electrical measurements of the terminal lines to identify active terminal lines, the control circuit (120) being arranged to measure a DC source resistance ratio across pairs of active terminal lines and compare the measured DC source resistance ratios with pre-stored values, the control circuit (120) further being arranged to emulate an off-hook condition so that the telephone switching system (102) generates a dial tone signal, the control circuit (120) being arranged to detect and monitor the dial tone, including any signal generated by the telephone switching system, and configure the signal path according to a communication protocol, the communication protocol being identified from the polled electrical measurements, wherein the control circuit (120) is further arranged to adjust the signal level of a receiving communication signal and a transmitting communication signal by selecting a stored set of operational parameters.

20. The apparatus of claim 19, wherein the control circuit (120) further comprises a central office emulator (200) for detecting an off-hook condition of the analog telephone instrument.

21. The apparatus of claim 20, wherein the control circuit (120) further comprises a hook switch block (202) for emulating an off-hook condition of a telephone set that is compatible with the telephone switching system.

22. The apparatus of claim 19, wherein the third port (124) is a two-wire port configured for coupling to a two-wire analog telephone instrument.

23. The apparatus of claim 22, further comprising a two-to-four wire converter (204) coupled to the two-wire port for converting bi-directional signals received from the two-wire port into separate transmit and receive signals.

24. The apparatus of claim 23, further comprising a fourth port (126) configured for coupling to a four- wires analog telephone instrument.

25. The apparatus of claim 24, further comprising a TX/RX audio block (206) in communication with the third (124) and fourth ports (126) for adjusting signal levels of signal received between the telephone switching system and an analog telephone instrument.

26. The apparatus of claim 19 further comprising a switch for selectively coupling the first port (114) to the second port (122) wherein the control circuit (120) is arranged to control the switch to momentarily disconnect the first port from the second port for initiating communication between the telephone switching system (102) and the telephone set.

27. The apparatus of claim 19, further comprising a digital line transceiver (212) for performing analog-to-digital and digital-to-analog conversions of signal between the telephone switching system (102) and the analog telephone instrument.

28. The apparatus of claim 19, further comprising a key pad (228) from which to initiate calls.

29. The apparatus of claim, 19 wherein the control circuit (120) further comprises a protocol storage unit (218) for storing a set of manufacturer's protocols that are accessible by the learning circuit and from which the protocol communication is identified.

30. The apparatus of claim 29, further comprising a FSK modem (232) in communication with the protocol storage device (218) for updating the manufacturer's protocols.

31. The apparatus of claim 19, wherein the learning circuit is an logic circuit arranged to operate according to a learning algorithm for initiating a simulated off-hook condition for a telephone set that is compatible with the telephone switching system (102) and sensing a dial-tone response, wherein a sensed dial tone indicates whether the telephone switching system (102) is a hybrid, a digital or an analog telephone switching system.

32. The apparatus of claim 19, wherein the learning circuit comprises a microprocessor.

## Patentansprüche

1. Verfahren zur adaptiven Schnittstellenbildung eines analogen Fernsprechapparats (106, 108) mit einem Fernsprechvermittlungssystem (102), das mehrere Endleitungen aufweist, wobei durch eine Schnittstellenvorrichtung (100) aus mehreren Endleitungen ein Signalweg bereitgestellt wird, wobei die Schnittstellenvorrichtung (100) mit dem analogen Fernsprechapparat (106, 108) und dem Fernsprechvermittlungssystem (102) gekoppelt ist, wobei das Verfahren die Schritte aufweist:
a. Abfragen elektrischer Messungen der mehreren Endleitungen, um aktive Endleitungen zu erkennen, wobei der Schritt des Abfragens elektrischer Messungen die Messung der Gleichstrom-Quellenwiderstandsverhältnisse, die an Paaren aktiver Endleitungen gemessen werden, und das Vergleichen der gemessenen Gleichstrom-Quellenwiderstandsverhältnisse mit vorgespeicherten Werten aufweist;
b. Emulation eines Aushängezustands, so das Fernsprechvermittlungssystem (102) ein Wähltonsignal erzeugt;
c. Detektion und Überwachung des Wähltons einschließlich jedes Signals, das durch das Fernsprechvermittlungssystem (102) erzeugt wird; und
d. Konfiguration des Signalwegs gemäß eines Kommunikationsprotokolls, wobei das Kommunikationsprotokoll durch Abfragen der elektrischen Messungen identifiziert wird und der Schritt der Konfiguration den Schritt der Durchführung von Signalpegeleinstellungen eines Empfangskommunikationssignals und eines Sendekommunikationssignals aufweist, indem ein gespeicherter Satz von Betriebsparametern ausgewählt wird, wobei die Kommunikationssignale zwischen dem analogen Fernsprechapparat (106, 108) und dem Fernsprechvermittlungssystem (102) durch den Signalweg übermittelt werden.

2. Verfahren nach Anspruch 1, das ferner den Schritt der Klassifizierung des Fernsprechvermittlungssystems (102) in eine Kategorie eines hybriden, eines analogen oder eines digitalen Fernsprechvermittlungssystems vor dem Schritt der Konfiguration des Signalwegs aufweist.

3. Verfahren nach Anspruch 2, wobei der Schritt des Abfragens elektrischer Messungen die Messung von Spannungen zwischen Paaren von Endleitungen aufweist, um die aktiven Endleitungen zu erkennen.

4. Verfahren nach Anspruch 3, das ferner den Schritt der Emulation eines Aushängezustands eines Fernsprechapparats, der mit einem Hybridfernsprechvermittlungssystem kompatibel ist, und der Abtastung auf eine Wähltonantwort hin vom Fernsprechvermittlungssystem (102) aufweist.

5. Verfahren nach Anspruch 4, wobei das Kommunikationsprotokoll aus einer Gruppe von Hybridsystemprotokollen des Herstellers ausgewählt wird, wenn eine Wähltonantwort abgetastet wird.

6. Verfahren nach Anspruch 5, wobei der Schritt der Konfiguration des Signalwegs den Schritt der Durchführung von Signalpegeleinstellungen des Empfangskommunikationssignals aufweist, wobei der Wählton und das Sendekommunikationssignal verwendet wird, wobei das Protokoll des Herstellers verwendet wird.

7. Verfahren nach Anspruch 4, das ferner die Wiederholung der Schritte des Abfragens elektrischer Messungen von mehreren Endleitungen, der Emulation eines Aushängezustands, der Detektion einer Überwachung des Wähltons und die Konfiguration des Signalwegs gemäß des Kommunikationsprotokolls in dem Fall aufweist, daß kein Wählton detektiert wird.

8. Verfahren nach Anspruch 1, wobei der Schritt des Vergleichens der gemessenen Gleichstrom-Quellenwiderstandsverhältnisse mit vorgespeicherten Werten das Vergleichen der Verhältnisse mit vorgespeicherten Werten aufweist, die erwartete Gleichstrom-Quellenwiderstandsverhältnisse für analoge und digitale Fernsprechvermittlungssysteme aufweisen.

9. Verfahren nach Anspruch 8, wobei Gleichstrom-Quellenwiderstandsverhältnismessungen unter unbelasteten Bedingungen und belasteten Bedingungen durchgeführt werden.

10. Verfahren nach Anspruch 8, das ferner den Schritt der Emulation eines Aushängezustands eines Fernsprechapparats, der mit einem analogen Vermittlungssystem kompatibel ist, und der Abtastung auf eine Wähltonantwort hin durch den Signalweg aufweist, wenn die Gleichstrom-Quellenwiderstandsverhältnisse für ein analoges Fernsprechvermittlungssystem kennzeichnend sind.

11. Verfahren nach Anspruch 10, wobei der Schritt der Konfiguration des Signalwegs nach einem Kommunikationsprotokoll die Konfiguration des Signalwegs nach einem Kommunikationsprotokoll aufweist, das aus einer Gruppe analoger Systemprotokolle des Herstellers ausgewählt wird, wenn eine Wähltonantwort abgetastet wird.

12. Verfahren nach Anspruch 11, wobei der Schritt der Konfiguration des Signalwegs den Schritt der Durchführung einer Pegeleinstellung eines Empfangskommunikationssignals aufweist, wobei der Wählton und ein Sendekommunikationssignal verwendet wird, wobei eine objektive Sendelautstärkebewertung verwendet wird.

13. Verfahren nach Anspruch 10, das ferner die Wiederholung der Schritte des Abfragens elektrischer Messungen von den mehreren Endleitungen, der Emulation eines Aushängezustands, der Detektion und der Überwachung des Wähltons und der Konfiguration des Signalwegs gemäß des Kommunikationsprotokolls in dem Fall aufweist, daß kein Wählton detektiert wird.

14. Verfahren nach Anspruch 8, das ferner die Schritte der Trennung des Signalwegs zwischen dem Fernsprechvermittlungssystem (102) und einem Fernsprechapparat aufweist, der mit dem Fernsprechvermittlungssystem kompatibel ist, wenn die Gleichstrom-Queilenwiderstandsverhältnisse für ein digitales Fernsprechvermittlungssystem kennzeichnend sind, wodurch das Fernsprechvermittlungssystem veranlaßt wird, eine Initialisierungssignalsequenz auszuführen.

15. Verfahren nach Anspruch 14, wobei der Schritt der Trennung des Signalwegs zwischen dem Fernsprechvermittlungssystem und dem Fernsprechapparat durch einen Signalwegschalter ausgeführt wird.

16. Verfahren nach Anspruch 15, das ferner den Schritt der Überwachung der Initialisierungssignalsequenz und der Auswahl eines Protokolls aus einer Gruppe von Digitalsystemprotokollen des Herstellers aufweist, die mit der Initialisierungssignalsequenz vereinbar sind.

17. Verfahren nach Anspruch 16, das ferner den Schritt der Prüfung des konfigurierten Signalwegs durch Emulation eines Aushängezustands für einen Fernsprechapparat, der mit einem digitalen Fernsprechvermittlungssystem kompatibel ist, und der Abtastung auf einen Wählton hin aufweist, wobei eine richtige Konfiguration durch einen abgetasteten Wählton angezeigt wird.

18. Verfahren nach Anspruch 17, das ferner die Wiederholung der Schritte des Abfragens elektrischer Messungen von den mehreren Endleitungen, der Emulation eines Aushängezustands, der Detektion und Überwachung des Wähltons und der Konfiguration des Signalwegs gemäß des Kommunikationsprotokolls, in dem Fall, daß kein Wählton detektiert wird, oder in dem Fall aufweist, daß die Initialisierungssignalsequenz nicht erkannt wird.

19. Adaptive Schnittstellenvorrichtung zur Schnittstellenbildung zwischen einem analogen Fernsprechapparat (106,108) in einem Fernsprechvermittlungssystem (102), wobei die adaptive Schnittstellenvorrichtung aufweist:
a) einen ersten Anschluß (114), der zur Kopplung der Vorrichtung mit Endleitungen des Fernsprechvermittlungssystems (102) konfiguriert ist, wobei das Fernsprechvermittlungssystem ein privates Fernsprechvermittlungssystem ist;
b) einen zweiten Anschluß (122), der zur Kopplung der Vorrichtung mit einem Fernsprechapparat konfiguriert ist, wobei der Fernsprechapparat zur Kompatibilität mit dem Fernsprechvermittlungssystem (102) vorkonfiguriert ist;
c) einen dritten Anschluß (124), der zur Kopplung der Vorrichtung mit dem analogen Fernsprechapparat konfiguriert ist;
d) eine Steuerschaltung (120), die in Verbindung mit dem ersten Anschluß (114), dem zweiten Anschluß (122) und dem dritten Anschluß (124) steht, wobei die Steuerschaltung (120) eine lernende Schaltung aufweist, die eingerichtet ist, elektrische Messungen der Endleitungen abzufragen, um aktive Endleitungen zu erkennen, wobei die Steuerschaltung (120) eingerichtet ist, ein Gleichstrom-Quellenwiderstandsverhältnis an Paaren aktiver Endleitungen zu messen und die gemessenen Gleichstrom-Quellenwiderstandsverhältnisse mit vorgespeicherten Werten zu vergleichen, wobei die Steuerschaltung (120) ferner eingerichtet ist, einen Aushängezustand zu emulieren, so daß das Fernsprechvermittlungssystem (102) ein Wähltonsignal erzeugt, die Steuerschaltung (120) eingerichtet ist, den Wählton einschließlich jedes Signals zu detektieren und zu überwachen, das durch das Fernsprechvermittlungssystem erzeugt wird, und den Signalweg gemäß eines Kommunikationsprotokolls zu konfigurieren, wobei das Kommunikationsprotokoll durch Abfragen der elektrischen Messungen identifiziert wird, wobei die Steuerschaltung (120) ferner eingerichtet ist, den Signalpegel eines Empfangskommunikationssignals und eines Sendekommunikationssignals einzustellen, indem ein gespeicherter Satz von Betriebsparametern ausgewählt wird.

20. Vorrichtung nach Anspruch 19, wobei die Steuerschaltung (120) ferner einen Fernsprechvermittlungsstellenemulator (200) zur Detektion eines Aushängezustands des analogen Fernsprechapparats aufweist.

21. Vorrichtung nach Anspruch 20, wobei die Steuerschaltung (120) ferner einen Gabelschalterblock (202) zur Emulation eines Aushängezustands eines Fernsprechapparats aufweist, der mit dem Fernsprechvermittlungssystem kompatibel ist.

22. Vorrichtung nach Anspruch 19, wobei der dritte Anschluß (124) ein Zweidrahtanschluß ist, der zur Kopplung mit einem analogen Zweidrahtfemsprechapparat konfiguriert ist.

23. Vorrichtung nach Anspruch 22, die ferner einen Zwei-auf- Vierdrahtumsetzer (204) aufweist, der mit dem Zweidrahtanschluß gekoppelt ist, zur Umsetzung bidirektionaler Signale, die vom Zweidrahtanschluß empfangen werden, in getrennte Sende- und Empfangssignale.

24. Vorrichtung nach Anspruch 23, die ferner einen vierten Anschluß (126) aufweist, der zur Kopplung mit einem analogen Vierdrahtfernsprechapparat konfiguriert ist.

25. Vorrichtung nach Anspruch 24, die ferner einen TX/RX- Audioblock (206) aufweist, der mit den dritten (124) und vierten Anschlüssen (126) zur Einstellung von Signalpegeln eines Signals in Verbindung steht, das zwischen dem Fernsprechvermittlungssystem und einem analogen Fernsprechapparat empfangen wird.

26. Vorrichtung nach Anspruch 19, die ferner einen Schalter zur selektiven Kopplung des ersten Anschlusses (114) mit dem zweiten Anschluß (122) aufweist, wobei die Steuerschaltung (120) eingerichtet ist, den Schalter so zu steuern, daß er augenblicklich den ersten Anschluß vom zweiten Anschluß zur Einleitung einer Kommunikation zwischen dem Fernsprechvermittlungssystem (102) und dem Fernsprechapparat trennt.

27. Vorrichtung nach Anspruch 19, die ferner einen digitalen Leitungstransceiver (212) zur Durchführung von Analog- Digital- und Digital-Analog-Umwandlungen des Signals zwischen dem Fernsprechvermittlungssystem (102) und dem analogen Fernsprechapparat aufweist.

28. Vorrichtung nach Anspruch 19, die ferner eine Tastatur (228) aufweist, von der Anrufe einzuleiten sind.

29. Vorrichtung nach Anspruch, 19 wobei die Steuerschaltung (120) ferner eine Protokollspeichereinheit (218) zum Speichern eines Satzes von Protokollen des Herstellers aufweist, auf die durch die lernende Schaltung zugegriffen werden kann und aus der die Protokollkommunikation erkannt wird.

30. Vorrichtung nach Anspruch 29, die ferner ein FSK-Modem (232) aufweist, das zur Aktualisierung der Protokolle des Herstellers mit der Protokollspeichervorrichtung (218) in Verbindung steht.

31. Vorrichtung nach Anspruch 19, wobei die lernende Schaltung eine Logikschaltung ist, die eingerichtet ist, gemäß eines Lernalgorithmus zu arbeiten, zur Einleitung eines simulierten Aushängezustands für einen Fernsprechapparat, der mit dem Fernsprechvermittlungssystem (102) kompatibel ist, und zur Abtastung einer Wähltonantwort, wobei ein abgetasteter Wählton anzeigt, ob das Fernsprechvermittlungssystem (102) ein hybrides, ein digitales oder ein analoges Fernsprechvermittlungssystem ist.

32. Vorrichtung nach Anspruch 19, wobei die lernende Schaltung einen Mikroprozessor aufweist.

## Revendications

1. Procédé d'interface adaptative d'un instrument téléphonique analogique (106, 108) avec un système de commutation téléphonique (102) comprenant une pluralité de lignes de terminal, dans lequel on fournit un trajet de signal à partir de la pluralité de lignes de terminal par un dispositif d'interface (100), le dispositif d'interface (100) étant couplé à l'instrument téléphonique analogique (106, 108) et au système de commutation téléphonique (102), le procédé comprenant les étapes incluant :
a. l'interrogation des mesures électriques de la pluralité de lignes de terminal pour identifier des lignes de terminal actives, dans laquelle l'étape d'interrogation des mesures électriques comprend la mesure de rapports de résistance de sources de courant continu mesurés sur des paires de lignes de terminal actives et la comparaison des rapports de résistance de sources de courant continu mesurés avec des valeurs pré-stockées ;
b. l'émulation d'une condition de combiné décroché, de telle sorte que le système de commutation téléphonique (102) génère un signal de tonalité ;
c. la détection et le contrôle de la tonalité, y compris tout signal généré par le système de commutation téléphonique (102) ; et
d. la configuration du trajet de signal selon un protocole de communication, ce protocole de communication étant identifié par les mesures électriques interrogées, dans lequel l'étape de configuration comprend l'étape de réalisation d'ajustements du niveau de signal d'un signal de communication de réception et d'un signal de communication d'émission en choisissant un ensemble de paramètres opérationnels stocké, dans lequel les signaux de communication sont communiqués entre l'instrument téléphonique analogique (106, 108) et le système de commutation téléphonique (102) par le trajet de signal.

2. Procédé selon la revendication 1, comprenant en outre l'étape de classification du système de commutation téléphonique (102) dans une catégorie de système de commutation téléphonique numérique, analogique ou hybride, avant l'étape de configuration du trajet de signal.

3. Procédé selon la revendication 2, dans lequel l'étape d'interrogation des mesures électriques comprend la mesure des tensions entre des paires de lignes de terminal pour identifier les lignes de terminal actives.

4. Procédé selon la revendication 3, comprenant en outre l'étape d'émulation d'une condition de combiné décroché d'un poste téléphonique compatible avec un système de commutation téléphonique hybride et de localisation d'une réponse de tonalité à partir du système de commutation téléphonique (102).

5. Procédé selon la revendication 4, dans lequel le protocole de communication est choisi dans un groupe de protocoles du fabricant de systèmes hybrides lorsqu'on détecte une réponse de tonalité.

6. Procédé selon la revendication 5, dans lequel l'étape de configuration du trajet de signal comprend l'étape de réalisation d'ajustements du niveau de signal du signal de communication de réception utilisant la tonalité et du signal de communication d'émission utilisant le protocole du fabricant.

7. Procédé selon la revendication 4, comprenant en outre la répétition des étapes d'interrogation des mesures électriques de la pluralité de lignes de terminal, d'émulation d'une condition de combiné décroché, de détection et de contrôle de la tonalité et de configuration du trajet de signal selon le protocole de communication, dans le cas où on ne détecte pas de tonalité.

8. Procédé selon la revendication 1, dans lequel l'étape de comparaison des rapports de résistance des sources de courant continu mesurés avec les valeurs pré-stockées comprend la comparaison des rapports avec des valeurs pré-stockées comprenant des rapports de résistance de sources de courant continu attendus pour des systèmes de commutation téléphoniques numériques et analogiques.

9. Procédé selon la revendication 8, dans lequel les mesures de rapports de résistance de sources de courant continu sont réalisées dans des conditions déchargées et dans des conditions chargées.

10. Procédé selon la revendication 8, comprenant en outre l'étape d'émulation d'une condition de combiné décroché d'un poste téléphonique compatible avec un système de commutation téléphonique analogique et la localisation d'une réponse de tonalité sur le trajet de signal, lorsque les rapports de résistance de sources de courant continu indiquent un système de commutation téléphonique analogique.

11. Procédé selon la revendication 10, dans lequel l'étape de configuration du trajet de signal en un protocole de communication comprend la configuration du trajet de signal en un protocole de communication choisi dans un groupe de protocoles du fabricant de systèmes hybrides, lorsqu'on localise une réponse de tonalité.

12. Procédé selon la revendication 11, dans lequel l'étape de configuration du trajet de signal comprend l'étape de réalisation d'ajustement de niveau d'un signal de communication de réception utilisant la tonalité et d'un signal de communication d'émission utilisant le rapport "Transmit Objective Loudness Rating".

13. Procédé selon la revendication 10, comprenant en outre la répétition des étapes d'interrogation des mesures électriques de la pluralité de lignes de terminal, d'émulation d'une condition de combiné décroché, de détection et de contrôle de la tonalité et de configuration du trajet de signal selon le protocole de communication, dans le cas où on ne détecte pas de tonalité.

14. Procédé selon la revendication 8, comprenant en outre les étapes de déconnexion du trajet de signal entre le système de commutation téléphonique (102) et un poste téléphonique compatible avec le système de commutation téléphonique lorsque les rapports de résistance des sources de courant continu indiquent un système de commutation téléphonique numérique, provoquant ainsi l'exécution d'une séquence de signal d'initialisation du système de commutation téléphonique.

15. Procédé selon la revendication 14, dans lequel l'étape de déconnexion du trajet de signal entre le système de commutation téléphonique et le poste téléphonique est réalisée par un commutateur de trajet de signal.

16. Procédé selon la revendication 15, comprenant en outre l'étape de contrôle de la séquence de signal d'initialisation et de sélection d'un protocole dans un groupe de protocoles du fabricant de systèmes numériques compatible avec la séquence de signal d'initialisation.

17. Procédé selon la revendication 16, comprenant en outre l'étape de test du trajet de signal configuré, en émulant une condition de combiné décroché pour un poste téléphonique qui est compatible avec un système de commutation téléphonique numérique et de localisation de tonalité, dans lequel une configuration convenable est indiquée par une tonalité localisée.

18. Procédé selon la revendication 17, comprenant en outre la répétition des étapes d'interrogation des mesures électriques de la pluralité de lignes de terminal, d'émulation d'une condition de combiné décroché, de détection et de contrôle de la tonalité et de configuration du trajet de signal selon le protocole de communication, dans le cas où on ne détecte pas de tonalité ou dans le cas où la séquence de signal d'initialisation n'est pas reconnue.

19. Appareil d'interface adaptatif permettant le raccordement d'un instrument téléphonique analogique (106, 108) à un système de commutation téléphonique (102), l'appareil d'interface adaptatif comprenant :
a. un premier port (114) configuré pour coupler l'appareil aux lignes de terminal du système de commutation téléphonique (102), dans lequel le système de commutation téléphonique est un système de commutation téléphonique privé ;
b. un deuxième port (122) configuré pour coupler l'appareil à un poste téléphonique, dans lequel le poste téléphonique est pré-configuré pour être compatible avec le système de commutation téléphonique (102) ;
c. un troisième port (124) configuré pour coupler l'appareil à l'instrument téléphonique analogique ;
d. un circuit de commande (120) communiquant avec le premier port (114), le deuxième port (122) et le troisième port (124), le circuit de commande (120) comprenant un circuit auto-adaptatif agencé pour interroger des mesures électriques des lignes de terminal pour identifier les lignes de terminal actives, le circuit de commande (120) étant agencé pour mesurer un rapport de résistance de sources de courant continu sur des paires de lignes de terminal actives et comparer les rapports de résistance de sources de courant continu mesurés avec des valeurs pré-stockées, le circuit de commande (120) étant en outre agencé pour émuler une condition de combiné décroché, de telle sorte que le système de commutation téléphonique (102) génère un signal de tonalité, le circuit de tonalité (120) étant agencé pour détecter et contrôler la tonalité, y compris tout signal généré par le système de commutation téléphonique et configurer le trajet de signal selon un protocole de communication, ce protocole de communication étant identifié par les mesures électriques interrogées, dans lequel le circuit de commande (120) est en outre agencé pour ajuster le niveau de signal d'un signal de communication de réception et d'un signal de communication d'émission en choisissant un ensemble stocké de paramètres opérationnels.

20. Appareil selon la revendication 19, dans lequel le circuit de commande (120) comprend en outre un émulateur de bureau central (200) permettant de détecter une condition de combiné décroché de l'instrument téléphonique analogique.

21. Appareil selon la revendication 20, dans lequel le circuit de commande (120) comprend en outre un bloc de commutation de raccord (202) permettant d'émuler une condition de combiné décroché d'un poste téléphonique compatible avec le système de commutation téléphonique.

22. Appareil selon la revendication 19, dans lequel le troisième port (124) est un port à deux fils configuré pour être couplé à un instrument téléphonique analogique à deux fils.

23. Appareil selon la revendication 22, comprenant en outre un convertisseur de quatre à deux fils (204) couplé au port à deux fils pour la conversion de signaux bidirectionnels reçus du port à deux fils en des signaux de réception et d'émission séparés.

24. Appareil selon la revendication 23, comprenant en outre un quatrième port (126) permettant de le coupler à un instrument téléphonique analogique à quatre fils.

25. Appareil selon la revendication 24, comprenant en outre un bloc audio TX/RX (206) communiquant avec les troisième (124) et quatrième (126) ports permettant d'ajuster les niveaux de signal du signal reçu entre le système de commutation téléphonique et un instrument téléphonique analogique.

26. Appareil selon la revendication 19, comprenant en outre un commutateur permettant de coupler de manière sélective le premier port (114) au deuxième port (122), dans lequel le circuit de commande (120) est agencé pour commander au commutateur de déconnecter momentanément le premier port du deuxième port pour amorcer la communication entre le système de commutation téléphonique (102) et le poste téléphonique.

27. Appareil selon la revendication 19, comprenant en outre un émetteur-récepteur de ligne numérique (212) permettant de réaliser des conversions de signaux numérique-analogique et analogique-numérique entre le système de commutation téléphonique (102) et l'instrument téléphonique analogique.

28. Appareil selon la revendication 19, comprenant en outre un clavier (228) à partir duquel on amorce des appels.

29. Appareil selon la revendication 19, dans lequel le circuit de commande (120) comprend en outre une unité de stockage de protocoles (218) permettant de stocker un ensemble de protocoles de fabricant accessibles par le circuit auto-adaptatif et à partir duquel la communication de protocole est identifiée.

30. Appareil selon la revendication 29, comprenant en outre un modem FSK (232) communiquant avec le dispositif de stockage de protocoles (218) et permettant de mettre à jour les protocoles du fabricant.

31. Appareil selon la revendication 19, dans lequel le circuit auto-adaptatif est un circuit logique agencé pour fonctionner selon un algorithme auto-adaptatif permettant d'amorcer une condition simulée de combiné décroché d'un poste téléphonique compatible avec le système de commutation téléphonique (102) et de localiser une réponse de tonalité, dans lequel une tonalité localisée indique si le système de commutation téléphonique (102) est un système de commutation téléphonique analogique, numérique ou hybride.

32. Appareil selon la revendication 19, dans lequel le circuit auto-adaptatif comprend un microprocesseur.
